(19) Europäisches Patentamt
European Patent Office
Office européen des brevets

(11) **EP 2 551 299 B2**

(12) **NEW EUROPEAN PATENT SPECIFICATION**
After opposition procedure

(45) Date of publication and mention
of the opposition decision:
**06.05.2020 Bulletin 2020/19**

(51) Int Cl.:
***C08L 23/10*** *(2006.01)*

(45) Mention of the grant of the patent:
**15.03.2017 Bulletin 2017/11**

(21) Application number: **11175640.9**

(22) Date of filing: **27.07.2011**

(54) **Lightweight polypropylene resin with superior surface characteristics for use in automotive interior applications**

Leichter Polypropylen-Harz mit sehr guten Oberflächenmerkmalen zur Verwendung in automobilen Innenanwendungen

Résine de polypropylène légère dotée de propriétés de surface supérieures pour une utilisation dans des applications d'intérieur d'automobiles

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.01.2013 Bulletin 2013/05**

(73) Proprietor: **Borealis AG**
**1220 Vienna (AT)**

(72) Inventors:
• **Hemmeter, Markus**
**91781 Weissenberg (DE)**
• **Grestenberger, Georg**
**3352 St. Peter in der Au (AT)**
• **Otte, Michael**
**4560 Kirchdorf/Krems (AT)**
• **Gubo, Robert**
**4730 Waizenkirchen (AT)**

(74) Representative: **Maiwald Patent- und Rechtsanwaltsgesellschaft mbH**
**Elisenhof**
**Elisenstraße 3**
**80335 München (DE)**

(56) References cited:
EP-A1- 2 083 046      WO-A1-2008/138794
WO-A1-2011/026160    WO-A2-00/75225
US-A1- 2006 052 541   US-A1- 2011 130 487

**Description**

The present invention relates to a polymer composition with superior surface characteristics, and more specifically to a propylene based polymer composition suitable for automotive applications, a method of producing such a polymer composition and its use.

Automotive interior parts like dashboards, door claddings, or trims are commonly made from polymers such as propylene based resins, and in particular thermoplastic polyolefin compounds including talc as filler are widely used for these applications. For such interior parts it is often tried to mimic a leather- or fabric-like surface and touch in order to give occupants a high-quality impression of the car. As a result materials should provide a low surface gloss level and good haptics. Additionally, to maintain the high-quality perception of the parts till the end of the car's lifetime the polymer should provide a high resistance to scratches, e.g. from keys, fingernails, or rings.

Due to the, compared to metals, low stiffness and surface hardness of polymers they are much more prone to scratches. Therefore, apart from material design and filler addition usually additives are used to overcome this drawback.

It is known in the art that the scratch resistance of thermoplastic polyolefin compounds including talc as a filler can be improved by the addition of slip agents. Slip agents such as fatty acid amides reduce the coefficient of friction of polymeric surfaces by migrating from the bulk to the surface. Furthermore, it is known that the addition of polyethylene may affect the morphology of the dispersed rubber phase stabilizing the surface and immediate subsurface layer of injection moldings.

US 2011/130487 discloses the same propylene based composition comprising propylene based polymers and elastomers and a cellulosic filler, in order to achieve better scratch properties in automotive articles (see search report). D1 in particular describes a polypropylene resin composition comprising polypropylene resin, polypropylene elastomer, ethylene/olefin copolymer, inorganic filler, volcanic rock and at least one cellulose fiber, wherein the cellulose fiber is present in an amount of 1 to 5 wt.-% based on the total amount of the composition (paragraphs [0014] to [0017] and [0022]).

US 2006/052541 relates to a polyolefin with improved surface toughness in terms of scratch resistance and describes a polyolefin on basis of a polypropylene matrix including a bimodal rubber (page 1, paragraph [0001]). According to this document polypropylene with improved scratch properties can be obtained from a composition comprising propylene based polymer and propylene based elastomer. Furthermore, it discloses that known polypropylenes with good scratch resistance comprise expensive mineral filler systems (e.g. talc in par. 44-45, 58,83; see page 1, paragraph [0007]).

WO 02/22731 discloses a propylene polymer composition including talc as filler, wherein the composition comprises a slip agent such as erucamide. A polypropylene composition having improved scratch resistance properties comprising a polypropylene, a branched low density polyethylene, a copolymer of ethylene, a $C_3$-$C_{20}$ $\alpha$-olefin, a talc filler, and a slip agent such as a fatty acid amide or a polysiloxane is described in WO 2006/063698.

WO 2005/111145 discloses a scratch resistant polymer composition comprising a propylene polymer, a polyolefin elastomer, a low molecular weight polymer, a talc filler, and a slip agent such as a saturated fatty acid amide or ethylenbis(amide).

WO 2007/139622 discloses a scratch and mar resistant polymer composition comprising at least one thermoplastic, an ethylene alpha-olefin plastomer, a fibrious inosilicate, and fatty amides or high molecular weight polysiloxanes as slip agent. However, slip agents such as fatty acid amides lead to a tacky feel of the surface, and thus, have a negative effect on the haptics of the polymer product.

Therefore, alternative routes to improve the scratch performance of compounds are targeted.

For example, polydimethylsiloxanes are known to improve scratch resistance combined with good haptics. EP 2 083 046 discloses a polymer composition comprising a thermoplastic resin, an ethylene $\alpha$-olefine plastomer, and a peroxide. Optionally, the composition contains polysiloxane as a scratch resistance improving additive.

However, such scratch resistance improving additives are expensive and high amounts of the additive are required in the polymer composition to obtain the desired effect.

Thus, there remains a need in the art for a scratch resistant polymer material with low gloss and good haptics. Accordingly, it is an object of the present invention to provide a polymer composition with low gloss and improved haptic quality and scratch resistance.

Another object of the present invention is to provide a scratch resistant polymer composition which does not require the addition of any scratch resistance improving additives or slip agents. It would also be desirable to provide a scratch resistant polymer composition which is easy and cost-effective to produce.

The foregoing and other objects are solved by the provision of a composition according to claims 1 to 5.

According to another aspect of the present invention a process according to claim 6 is provided.

Another aspect of the present invention is the use according to claim 7.

According to still another aspect of the present invention an automotive article according to claim 8 is provided.

**Brief description of the figures:**

Fig. 1 shows a confocal laser scanning microscopy image and the corresponding depth profile of a polymer composition of the state of the art (talc filled polypropylene without scratch resistance improving additive).

Fig. 2 shows a confocal laser scanning microscopy image and the corresponding depth profile of another polymer composition of the state of the art with state of the art scratch resistance improving additive.

Fig. 3 shows a confocal laser scanning microscopy image and the corresponding depth profile of a polymer composition according to the present invention.

**Definitions:**

A "cellulose-based filler" in the meaning of the present invention is a material that comprises at least 50 wt.-%, preferably more than 60 wt.-%, more preferably more than 70 wt.-%, still more preferably more than 80 wt.-%, yet more preferably 80 to 99 wt.-%, of cellulose and/or chemically modified cellulose such as hydroxypropylmethyl cellulose or cellulose acetate, based on the total amount of the cellulose-based filler.

For the purpose of the present invention, the term "gloss" refers to the ability of the polymer composition to reflect some portion of the incident light at the mirror angle. Gloss may be based on a measurement of the quantity of light specularly reflected from the surface of a polymer composition at a set angle, for example, at 60°, and is specified in percent.

The expression "heterophasic" as used in the present invention indicates that the elastomeric propylene copolymer is (finely) dispersed in the propylene homo- and/or copolymer. In other words the propylene homo- and/or copolymer constitutes a matrix in which the elastomeric propylene copolymer forms inclusions in the matrix, i.e. in the propylene homo- and/or copolymer. Thus, the matrix contains (finely) dispersed inclusions being not part of the matrix and said inclusions contain the elastomeric propylene copolymer. In other words, the elastomeric propylene copolymer constitutes an elastomeric propylene copolymer phase. The term "inclusion" according to this invention shall preferably indicate that the matrix and the inclusion form different phases within the heterophasic system, said inclusions are for instance visible by high resolution microscopy, like electron microscopy or scanning force microscopy.

The term "melt flow rate" as used in the context of the present invention is a measure of the ease of flow of the melt of a thermoplastic polymer, and is an indirect measure of molecular weight, with high melt flow rate corresponding to low molecular weight. The melt flow rate is inversely proportional to viscosity of the melt at the conditions of the test. As used herein, the melt flow rate is specified in g/10 min.

The term "molecular weight distribution (MWD)" as used in the present invention describes the relationship between the number of moles of each polymer species and the molar mass of that species.

For the purpose of the present invention, the expression "propylene homopolymer" refers to a polypropylene that consists substantially, i.e. of at least 97 wt.-%, preferably of at least 98 wt.-%, more preferably of at least 99 wt.-%, most preferably of at least 99.8 wt.-% of propylene units. In a preferred embodiment only propylene units in the propylene homopolymer are detectable.

Throughout the present document, the "particle size" of a material is described by its distribution of particle sizes. The value $d_x$ represents the diameter relative to which $x$ % by weight of the particles have diameters less than $d_x$. This means that the $d_{20}$ value is the particle size at which 20 wt.-% of all particles are smaller, and the $d_{75}$ value is the particle size at which 75 wt.-% of all particles are smaller. The $d_{50}$ value is thus the weight median particle size, i.e. 50 wt.-% of all grains are bigger or smaller than this particle size. For the purpose of the present invention the particle size is specified as weight median particle size $d_{50}$ unless indicated otherwise. For determining the weight median particle size $d_{50}$ value of particles a Sedigraph 5100 device from the company Micromeritics, USA can be used.

The term "random copolymer" as used in the present invention indicates that the comonomers within the propylene copolymer matrix phase are randomly distributed. The randomness defines the amount of isolated comonomer units, i.e. those which have no neighbouring comonomer units, compared to the total amount of comonomers in the polymer chain.

"Raw cellulose" in the meaning of the present invention is a product derived from the so-called "cooking" of crushed wood in aqueous suspensions in an autoclave at high temperature in the presence of chemical agents such as sodium sulphate, sodium bisulphite, sodium hydroxide.

In the meaning of the present invention, the "scratch visibility" is a measure of the ability of a material to withstand scratches. As used herein, the scratch visibility is specified as the difference of the luminance $\Delta L$ of the unscratched from the scratched areas.

"Surface tack" in the meaning of the present invention is a measure of the stickiness or adhesiveness of a material and is specified as surface tack quotient $Q_T$.

The expression "xylene cold soluble (XCS)" as used throughout the present invention provides a relative measure of the total soluble fraction of polymers, like the heterophasic propylene composition. The soluble fraction approximately correlates to the elastomeric fraction of the heterophasic propylene composition.

The inventive polymer composition comprises (a) at least one heterophasic polymer composition and (b) a cellulose-based filler as set forth in claim 1. The heterophasic polymer composition consists of a propylene homopolymer and/or a propylene copolymer matrix phase (M), and an elastomeric propylene copolymer (E1) which is dispersed within said matrix phase.

In the following the components of the composition will be described in more detail.

**Heterophasic polymer composition**

The at least one heterophasic polymer composition consists of a propylene homo-and/or copolymer matrix phase (M) and an elastomeric propylene copolymer (E1) which is dispersed within said matrix phase. Heterophasic polymer systems are well known in the art and are systems in particular obtained in a process comprising at least two steps resulting in a multiphase structure comprising a propylene matrix and inclusions therein comprising amorphous elastomer. Such systems can be easily tailored for the automotive requirements by setting the comonomer content in the matrix and in the elastomeric phase respectively.

The heterophasic polymer comprises as polymer components only the propylene homo- and/or copolymer matrix phase (M) and the elastomeric propylene copolymer (E1) being dispersed within the matrix phase. In other words the heterophasic polymer may contain further additives but no other polymer. However, the heterophasic polymer may include polyethylene in an amount not exceeding 5 wt.-%, preferably not exceeding 3 wt.-%, like not exceeding 1 wt.-%, based on the total amount of the heterophasic polymer. The only additional polymer which may be present in such low amounts is a polyethylene which is a reaction product obtained by the preparation of the heterophasic polymer composition. Accordingly the heterophasic polymer as defined in the present invention contains only a propylene homo- and/or copolymer matrix phase (M), an elastomeric propylene copolymer (E1), and optionally a polyethylene in amounts as mentioned in this paragraph.

Preferably the propylene content in the heterophasic polymer is 82.0 to 97.0 wt.-%, more preferably 86.0 to 95.0 wt.-%, based on the total amount of the heterophasic polymer composition, more preferably based on the amount of the polymer components of the heterophasic polymer composition, yet more preferably based on the amount of the propylene homo- and/or copolymer matrix phase (M) and the elastomeric propylene copolymer (E1) together. The remaining part constitutes the comonomers as defined for the propylene homo- and/or copolymer matrix phase (M) being a random propylene copolymer and the elastomeric propylene copolymer (E1), respectively, preferably ethylene. Accordingly the comonomer content, preferably ethylene content is in the range of 3.0 to 18.0 wt.-%, more preferably in the range of 5.0 to 14.0 wt.-%, based on the total amount of the heterophasic polymer composition, more preferably based on the amount of the polymer components of the heterophasic polymer composition, yet more preferably based on the amount of the propylene homo- and/or copolymer matrix phase (M) and the elastomeric propylene copolymer (E1) together.

The matrix phase (M) of the heterophasic polymer composition consists of the propylene homo- and/or copolymer.

The propylene homo- and/or copolymer forming the matrix phase (M) can be a random propylene copolymer or a propylene homopolymer. In a preferred embodiment, the matrix is a propylene homopolymer.

In case the propylene homo- and/or copolymer forming the matrix phase (M) is a random propylene copolymer it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the random propylene copolymer comprises, especially consists of, monomers copolymerizable with propylene from the group consisting of ethylene, 1-butene and 1-hexene. More specifically the random propylene copolymer comprises - apart from propylene - units derivable from ethylene and/or 1-butene. In a preferred embodiment the random propylene copolymer comprises units derivable from ethylene and propylene only. The comonomer content in the random propylene copolymer is preferably in the range of more than 0.5 to 10.0 wt.-%, still more preferably in the range of more than 0.5 to 7.0 wt.-%.

According to a preferred embodiment of the present invention, the propylene homo-and/or copolymer forming the matrix phase (M) is isotactic. Accordingly it is appreciated that the propylene homopolymer has a rather high pentad concentration, i.e. more than 90 %, more preferably more than 92 %, still more preferably more than 93 % and yet more preferably more than 95 %, like at least 97 %. On the other hand it is preferred that the random propylene copolymer has a triad concentration of more than 90 %, more preferably more than 92 %, still more preferably more than 93 %,

and yet more preferably more than 95 %, like at least 97 %.

The propylene homo- and/or copolymer matrix phase (M) can have a xylene cold soluble content (XCS) in a broad range, i.e. up to 6.0 wt.-%, based on the total amount of propylene homo- and/or copolymer matrix phase (M). Accordingly the propylene homo- and/or copolymer matrix phase (M) may have a xylene cold soluble content (XCS) in the range from 0.3 to 6.0 wt.-%, e.g., from 0.5 to 5.5 wt.-%, based on the amount of the propylene homo- and/or copolymer matrix phase (M).

According to a preferred embodiment the propylene homo- and/or copolymer matrix phase (M), in particular in case the matrix phase (M) is a propylene homopolymer has a xylene cold soluble (XCS) content in the range from 0.5 to 4.5 wt.-%, more preferably in the range from 0.5 to 4.0 wt.-%, still more preferably from 0.8 to 3.5 wt.-%, based on the amount of the propylene homo- and/or copolymer matrix phase (M).

According to one embodiment of the present invention, the propylene homo- and/or copolymer matrix phase (M) has a melt flow rate $MFR_2$ (230 °C) of 10 to 300 g/10 min, preferably in the range from 25 to 150 g/10 min, more preferably in the range from 30 to 100 g/10 min.

Accordingly it is preferred that the propylene homo- and/or copolymer forming the matrix phase (M) has a weight average molecular weight (Mw) from 100000 to 400000 g/mol, preferably from 150000 to 350000, more preferably from 175000 to 300000 g/mol.

A broad molecular weight distribution (MWD) improves the processability of the propylene homo- and/or copolymer matrix phase (M). Accordingly, it is appreciated that the molecular weight distribution (MWD) of the propylene homo- and/or copolymer forming the matrix phase (M) is at least 2.8, more preferably at least 3.0, e.g., at least 3.3 In a preferred embodiment the molecular weight distribution (MWD) is preferably from 2.8 to 10.0, still more preferably from 3.0 to 8.0.

In addition to the propylene homo- and/or copolymer forming the matrix phase (M), the heterophasic polymer composition comprises an elastomeric propylene copolymer (E1) which is dispersed within said matrix phase (M).

According to one embodiment, the elastomeric propylene copolymer (E1) comprises monomers copolymerizable with propylene, for example, comonomers such as ethylene and/or $C_4$ to $C_{12}$ $\alpha$-olefins, preferably ethylene and/or $C_4$ to $C_{10}$ $\alpha$-olefins, e.g. 1-butene and/or 1-hexene. Preferably the elastomeric propylene copolymer (E1) comprises, especially consists of, monomers copolymerizable with propylene from the group consisting of ethylene, 1-butene and 1-hexene. More specifically the elastomeric propylene copolymer (E1) comprises - apart from propylene - units derivable from ethylene and/or 1-butene. Thus, in an especially preferred embodiment the elastomeric propylene copolymer phase (E1) comprises units derivable from ethylene and propylene only.

In case the propylene homo- and/or copolymer forming the matrix phase (M) is a random propylene copolymer it is preferred that the comonomer(s) of the random propylene copolymer and the elastomeric propylene copolymer (E1) are the same.

The properties of the elastomeric propylene copolymer phase (E1) mainly influences the xylene cold soluble (XCS) content of the heterophasic polymer composition. Thus, according to the present invention the xylene cold soluble (XCS) fraction of heterophasic polymer composition is regarded as the elastomeric propylene copolymer (E1) of the heterophasic polymer composition.

According to one embodiment of the present invention, the amount of the elastomeric propylene copolymer (E1), i.e. of the xylene cold soluble (XCS) fraction, of the heterophasic polymer composition is in the range from 12 to 50 wt.-%, preferably in the range from 12 to 40 wt.-%, and more preferably in the range from 12 to 38 wt.-%, based on the total amount of the heterophasic polymer composition.

According to one embodiment of the present invention, the elastomeric propylene copolymer (E1) has a balanced weight average molecular weight. Small particles are formed in case the matrix (M) and the elastomeric phase (E1) have similar molecular weight. Small particles are generally preferred, because this improves the overall properties of the heterophasic system. However, in the instant invention the matrix has by trend a high melt flow rate and thus a rather low weight average molecular weight. Accordingly also the elastomeric propylene copolymer (E1) should have a low weight average molecular weight in order to obtain small particles. On the other hand this would mean in the present case a severe reduction in low weight average molecular weight for the elastomeric propylene copolymer (E1), which has negative impact on the mechanical properties. Accordingly the intrinsic viscosity must be carefully chosen.

Low intrinsic viscosity (IV) values reflect a low weight average molecular weight. Thus, it is appreciated that the elastomeric propylene copolymer (E1), i.e. the xylene cold soluble fraction (XCS) of the heterophasic polymer composition, has an intrinsic viscosity (IV) in the range from 1.5 to 3.5 dl/g, more preferably in the range from 1.8 to 3.5 dl/g, still more preferably in the range from 2.0 to 3.3 dl/g.

According to one embodiment of the present invention, the comonomer content, more preferably ethylene content, of the elastomeric propylene copolymer (E1) is equal or less than 75 wt.-%, preferably in the range of 15 to 75 wt.-%, more preferably in the range of 20 to 50 wt.-%, and most preferably in the range of 25 to 40 wt.-%, based on the total amount of the elastomeric propylene copolymer (E1). Accordingly it is appreciated that the propylene content of the elastomeric propylene copolymer (E1), is equal or more than 25 wt.-%, preferably in the range from 25 to 85 wt.-%,

more preferably in the range from 50 to 80 wt.-%, and most preferably in the range from 60 to equal or less than 75 wt.-%, based on the total amount of the elastomeric propylene copolymer (E1).

The elastomeric propylene copolymer phase consists of the elastomeric propylene copolymer (E1).

Processes for preparing heterophasic polymer systems are well known in the art, and are multi-step processes containing at least two process steps. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

According to one embodiment of the present invention, the heterophasic polymer composition is obtained by producing the propylene homo- and/or copolymer matrix phase (M) in at least one reactor, transferring said propylene homo- and/or copolymer matrix phase (M) in a subsequent reactor, where in presence of the matrix phase the elastomeric propylene copolymer (E1) is produced.

A suitable catalyst for the polymerization of the heterophasic polymer composition is any stereospecific catalyst for propylene polymerization which is capable of polymerizing and copolymerizing propylene and comonomers at a temperature of 40 to 110°C and at a pressure from 10 to 100 bar. Ziegler-Natta as well as metallocene catalysts are suitable catalysts. One skilled in the art is aware of the various possibilities to produce such heterophasic polymers and will simply find out a suitable procedure to produce suitable heterophasic polymers which can be used in the present invention.

According to one embodiment, the heterophasic polymer composition of the present invention has a rather high melt flow rate. Accordingly it is preferred that the heterophasic polymer has a melt flow rate $MFR_2$ (230 °C) of at least 10 g/10 min, more preferably in the range from 10 to 300 g/10 min, and most preferably in the range from 15 to 100 g/10 min, still more preferably in the range from 15 to 80 g/10 min.

According to a preferred embodiment, the heterophasic polymer composition is thermo-mechanically stable. Accordingly it is appreciated that the heterophasic polymer has a melting temperature ($T_m$) of at least 135 °C, more preferably in the range from 140 to 170 °C, most preferably in the range from 150 to 168°C.

The composition of the present invention may comprise the heterophasic polymer composition in an amount of at least 50 wt.-%, based on the total amount of the composition. More preferably the instant composition comprises at least 55 wt.-%, more preferably 50 to 95 wt.-%, yet more preferably 55 to 90 wt.-%, still more preferably 60 to 85 wt.-%, of the heterophasic polymer composition.

**Cellulose-based filler**

In addition to the heterophasic polymer composition, the inventive composition comprises a cellulose-based filler, according to claim 1. Surprisingly, it has been found that the use of a cellulose-based filler in a polymer composition improves the scratch resistance of the polymer composition. The use of a cellulose-based filler in a polymer composition comprising at least one heterophasic polymer composition leads to a polymer material that at comparable mechanical performance shows much higher resistance to scratches than comparable talc filled systems. Furthermore, it has been found that the haptic quality of the products obtained from the inventive polymer composition is improved, i.e. the products possess low surface tack, and the products show low gloss.

A cellulose-based filler is used for improving the scratch resistance of a polymer composition. Concerning the preferred embodiments of the heterophasic polymer composition and/or the polymer composition it is referred to the information provided herein.

The cellulose-based filler is used for improving the scratch resistance of a polymer composition, wherein the polymer composition comprising the cellulose-based filler has an increased scratch resistance compared to the polymer composition without the cellulose-based filler. The increased scratch resistance is characterized by a reduced scratch visibility. According to a preferred embodiment of the present invention, the polymer composition comprising the cellulose-based filler has a scratch visibility $\Delta L$ of $\Delta L \leq 1.5$, preferably $\Delta L \leq 1.25$, more preferably $\Delta L \leq 1.20$, and most preferably $\Delta L \leq 1.10$, like $\Delta L \leq 1.00$.

The cellulose-based filler is used for reducing the surface tack of a polymer composition. Concerning the preferred embodiments of the heterophasic polymer composition and/or the polymer composition it is referred to the information provided herein.

The cellulose-based filler is used for reducing the surface tack of a polymer composition, wherein the polymer composition comprising the cellulose-based filler has a reduced surface tack compared to the polymer composition without the cellulose-based filler. According to a preferred embodiment of the present invention, the polymer composition comprising the cellulose-based filler has a surface tack $Q_T$ (unstored) of $Q_T \leq 0.60$, preferably $Q_T \leq 0.55$, more preferably $Q_T \leq 0.50$, and most preferably $Q_T \leq 0.40$ and/or a surface tack $Q_T$ (14 d/70°C) of $Q_T \leq 0.75$, preferably $Q_T \leq 0.70$, more preferably $Q_T \leq 0.50$, and most preferably $Q_T \leq 0.40$.

According to still another embodiment, a cellulose-based filler is used for improving the scratch resistance and reducing the surface tack of a polymer composition. Concerning the preferred embodiments of the heterophasic polymer composition and/or the polymer composition it is referred to the information provided herein.

The cellulose-based filler is used for improving and reducing the surface tack of a polymer composition, wherein the polymer composition comprising the cellulose-based filler has an increased scratch resistance and reduced surface tack compared to the polymer composition without the cellulose-based filler. According to a preferred embodiment of the present invention, the polymer composition comprising the cellulose-based filler has a scratch visibility $\Delta L$ and surface tack $Q_T$ (unstored) of $\Delta L \leq 1.5$ and $Q_T \leq 0.80$, preferably $\Delta L \leq 1.25$ and $Q_T \leq 0.75$, more preferably $\Delta L \leq 1.00$ and $Q_T \leq 0.60$, and most preferably $\Delta L \leq 0.90$ and $Q_T \leq 0.40$ and/or a scratch visibility $\Delta L$ and surface tack $Q_T$ (14 d/70°C) of $\Delta L \leq 1.5$ and $Q_T \leq 0.95$, preferably $\Delta L \leq 1.25$ and $Q_T \leq 0.80$, more preferably $\Delta L \leq 1.00$ and $Q_T \leq 0.60$, and most preferably $\Delta L \leq 0.90$ and $Q_T \leq 0.40$.

The cellulose-based filler can be directly derived from cellulose-containing natural sources or from cellulose-containing recycled industrial products. Examples for such sources or products are wood, flax, hemp, jute, straw, hardboard, cardboard, paper, or pulp.

The cellulose-based filler also can be a cellulose that has been extracted from such sources and has been chemically processed and/or chemically modified. Examples for such cellulose-based filler materials are raw cellulose, cellulose, cellulose acetate, cellulose triacetate, cellulose propionate, cellulose acetate propionate, cellulose acetate butyrate, nitrocellulose, methylcellulose, ethylcellulose, ethyl methyl cellulose, hydroxyethyl cellulose, hydroxypropyl cellulose (HPC), hydroxyethyl methyl cellulose, hydroxypropyl methyl cellulose (HPMC), ethyl hydoxyethyl cellulose, or carboxymethyl cellulose (CMC).

According to one embodiment the cellulose-based filler is selected from the group consisting of wood, flax, hemp, jute, straw, hardboard, cardboard, paper, pulp, raw cellulose, cellulose, cellulose acetate, cellulose triacetate, cellulose propionate, cellulose acetate propionate, cellulose acetate butyrate, nitrocellulose, methylcellulose, ethylcellulose, ethyl methyl cellulose, hydroxyethyl cellulose, hydroxypropyl cellulose (HPC), hydroxyethyl methyl cellulose, hydroxypropyl methyl cellulose (HPMC), ethyl hydoxyethyl cellulose, carboxymethyl cellulose (CMC), and any mixtures thereof. Preferably, the cellulose-base filler is selected from the group consisting of wood, raw cellulose and cellulose.

The cellulose-based filler may be present in form of particles or fibers.

The mean particle size $d_{50}$ of the filler is between 70 to 150 $\mu$m.

According to claim 1, the composition of the present invention contains the cellulose-based filler in an amount of from 7.5 to 22 wt.-%, based on the total amount of the composition.

**Further optional components**

In addition to the components described above, the inventive composition may contain further optional components.

According to an optional embodiment of the present invention, the inventive composition comprises antioxidants, UV stabilizers and/or UV absorbers to improve the long term ageing. Examples of suitable antioxidants are quinolein, e.g., trimethylhydroxyquinolein (TMQ), imidazole, e.g., zinc mercapto toluyl imidazole (ZMTI), and conventional antioxidants, such as hindered phenols, lactones, and phosphites.

In addition or alternatively, the composition of the present invention may also optionally include 0.05 to 3 wt.-% of one or more nucleating agents, such as dibenzylidene sorbitol (DBS), sodium benzoate, and di(alkylbenzylidene)sorbitol, based on the total amount of the composition. The nucleating agents are usually added in small amounts from 0.0001 to 1 wt.-%, preferably from 0.001 to 0.7 wt.-%, based on the total amount of the composition. The composition according to the present invention does not comprise talc.

In addition or alternatively, the composition of the present invention may further optionally include at least one of additional lubricants, anti-blocking agents, antistatic agents, waxes, foaming agents, flame retardants, and/or other additives known in the art.

**Preparation of the inventive composition**

The composition of the present invention can be prepared by any suitable method known in the art, such as by blending of the at least one heterophasic polymer composition and the cellulose-base filler, as well as any optional further additives listed above, either directly, e.g., in an extruder, such that the same extruder is used to make the finished product, or by pre-melt mixing in a separate mixer or extruder. For mixing, a conventional compounding or blending apparatus, e.g. a Banbury mixer, a 2- roll rubber mill, Buss-co-kneader or a twin screw extruder may be used.

According to one embodiment, the inventive composition is prepared by blending the at least one heterophasic polymer with the cellulose-based filler. Preferably, the cellulose-based filler is mixed into the heterophasic polymer prior to or during the extrusion process in a one-step compounding process.

According to one preferred embodiment of the present invention, the at least one heterophasic polymer composition, the cellulose-based filler, are extruded in an extruder. Preferably, the heterophasic polymer composition is obtained by producing the propylene homopolymer and/or propylene copolymer matrix phase (M) in at least one reactor, transferring said matrix phase in a subsequent reactor, where in presence of the matrix phase (M) the elastomeric propylene copolymer (E1) is produced.

The polymer materials recovered from the extruder are usually in the form of pellets. These pellets are then preferably further processed by injection molding to generate articles and products of the composition according to the present invention.

According to one embodiment the polymer composition of the present invention has a gloss value of less than 3.0%, preferably less than 2.5 %, more preferably less than 2.0 % , and most preferably less than 1.5 %, measured on injection moulded plaques with a grained surface (grain K09 from Eschmann Textures) at an angle of 60° according to DIN 67530.

According to one embodiment the composition of the present invention has a scratch visibility $\Delta L$ of less than 1.5, preferably less than 1.25, more preferably less than 1.0, and most preferably less than 0.9, wherein the scratch visibility $\Delta L$ is measured according to the method described in the examples section below with a load of 10 N on a grained surface (grain K09 from Eschmann Textures).

According to one embodiment the composition of the present invention has a surface tack $Q_T$ of less than 1.0, preferably less than 0.75, more preferably less than 0.5, and most preferably less than 0.4, wherein the surface tack $Q_T$ is measured according to the method described in the examples section below on injection molded multigrain plaques with a film gate using the grain K29 from Eschmann textures. The K29 surface is defined as a grain with a grain depth of 0.01 mm, and a minimum draft angle of 1° for ejection from the injection moulding tool. A detailed description of the test method for quantifying surface tack can also be found in the paper "A novel test method for quantifying surface tack of polypropylene compound surfaces" by Çakmak et al., which will be published in eXPRESS Polymer Letters in 2011.

### Articles made from the inventive composition

The articles produced from the inventive combination of a heterophasic polymer and a cellulose-based filler possess an improved scratch resistance in combination with low gloss and good haptics such as low surface tack.

The composition of the present invention is preferably used for the production of automotive articles, like moulded automotive articles, preferably automotive injection moulded articles. Even more preferred is the use of the inventive composition for the production of car interiors and exteriors, like bumpers, side trims, step assists, body panels, spoilers, dashboards, interior trims and the like.

According to a preferred embodiment of the present invention, the composition of the present invention is used for the production of automotive articles, preferably interior automotive articles, more preferably dash boards, instrument panels, door claddings, arm rests, gear sticks, shift lever knobs, mats, interior skins, trunk claddings, or interior trims.

The present invention also provides (automotive) articles, like injection molded articles, comprising at least to 60 wt.-%, preferably at least 80 wt.-%, more preferably at least 95 wt.-%, and most preferably consisting of the inventive polymer composition. Accordingly the present invention is especially directed to automotive articles, especially to car interiors and exteriors, like bumpers, side trims, step assists, body panels, spoilers, dashboards, interior trims and the like, comprising at least to 60 wt.-%, preferably at least 80 wt.-%, more preferably at least 95 wt.-%, and most preferably consisting of the inventive composition.

According to a preferred embodiment of the present invention, the automotive article is an interior automotive article, more preferably a dash board, instrument panel, door cladding, arm rest, gear stick, shift lever knob, mat, interior skin, trunk cladding, or interior trim.

The present invention will now be described in further detail by the examples provided below.

## EXAMPLES

### 1. Measuring Methods

The following definitions of terms and determination methods apply for the above general description of the invention as well as to the below examples unless otherwise defined.

The **Density** was measured according to ISO 1183-1 - method A (2004). Sample preparation is done by compression moulding in accordance with ISO 1872-2:2007. **MFR$_2$ (230 °C)** was measured according to ISO 1133 (230 °C, 2.16 kg load). **MFR$_2$ (190 °C)** was measured according to ISO 1133 (190 °C, 2.16 kg load).

The **content of xylene cold solubles (XCS, wt.-%)** is determined at 25 °C according ISO 16152; first edition; 2005-07-01.

The **intrinsic viscosity** was measured according to DIN ISO 1628/1, October 1999 (in decalin at 135 °C).

The **tensile modulus** was measured according to ISO 527-2 (cross head speed = 1 mm/min; 23 °C) using injection moulded specimens as described in EN ISO 1873-2 (dog bone shape, 4 mm thickness).

The **Charpy notched impact strength (Charpy NIS)** was measured according to ISO 179 2C / DIN 53453 at 23 °C, using injection moulded bar test specimens of 80x10x4 $mm^3$ prepared in accordance with ISO 294-1:1996.

The **gloss** was measured on injection moulded grained specimen according to DIN 67530 at an angle of 60°. The grain for gloss measurements was identical to the grain used in evaluation of scratch visibility.

### Surface tack

The surface tack measurement was performed on injection moulded multigrain plaques with a film gate using the grain K29. The K29 surface is defined as a grain with a grain depth of 0.01 mm, and a minimum draft angle of 1° for ejection from the injection moulding tool. The section with this grain was cut out from the plaque with a bench shear.

The material examination was performed either unstored or after various intervals of therma. ageing. For thermal ageing, the specimens were put into a fan oven at 70°C In the current investigation the specimens were aged for 7 and 14 days. After the temperature exposure the specimens were conditioned for approximately 1 h at 23°C and 50% relative humidity before testing surface tack.

To perform the experiments an Instron tensile testing machine was used (ElectroPuls E3000, Instron Deutschland GmbH, Germany) with an elastomer die tip having a diameter of 25 mm and a thickness of 5 mm. The compressive force F was -50 N, the holding time $t_H$ was 91 s, and the haul-off speed v was 55 mm/s. The tests were performed at standard laboratory climate conditions (23°C and 50% relative humidity). Each single surface tack measurement was performed with this setup in the following way: After the elastomer (NR/SBR) tip had been cleaned and attached to the die by means of a double-side adhesive tape, the tackiness force $F_T$ of both the aluminium reference and the specimen (sample) were measured. The surface tack is reported as tack quotient $Q_T$, which was calculated by the following Equation:

$$Q_T = \frac{F_{T,\,sample}}{F_{T,\,reference}}$$

and averaged over a minimum of three successive measurements.

A detailed description of the test method for quantifying surface tack can also be found in the paper "A novel test method for quantifying surface tack of polypropylene compound surfaces" by Çakmak et al., which will be published in eXPRESS Polymer Letters in 2011.

### Scratch visibility

To determine the scratch visibility a Cross Hatch Cutter Model 420P, manufactured by Erichsen, was used. For the tests, plaques of 70x70x4 mm size were cut from a moulded grained (grain parameters: average grain size = 1 mm, grain depth = 0.12 mm, conicity = 6°) plaque of size 140x200x4 mm. The minimum period between injection moulding of specimens and scratch-testing was 7 days.

For testing the specimens must be clamped in a suitable apparatus as described above. Scratches were applied at a force of 10 N using a cylindrical metal pen with a ball shaped end (radius = 0.5 mm $\pm$ 0.01). A cutting speed of 1000 mm/min was used.

A minimum of 20 scratches parallel to each other were brought up at a load of 10 N with a distance of 2 mm. The application of the scratches was repeated perpendicular to each other, so that the result was a scratching screen. The scratching direction should be unidirectional.

The scratch visibility is reported as the difference of the luminance $\Delta L$ of the unscratched from the scratched areas. $\Delta L$ values were measured using a spectrophotometer that fulfils the requirements to DIN 5033. Light source for quantification of AL D65/10°. Measured $\Delta L$ values must be below a maximum of 1.5.

A detailed test description of the test method (Erichsen cross hatch cutter method) can be found in the article "Evaluation of scratch resistance in multiphase PP blends" by Thomas Koch and Doris Machl, published in POLYMER TESTING 26 (2007), p. 927-936.

### 2. Examples

A reference polymer composition (IE: reference example) and five comparative compositions (CE: comparative examples) were prepared. The components of the compositions are listed in Table 3.

The polymer compositions were prepared by melt blending the components on a corotating twin screw extruder type Coperion ZSK 40 (screw diameter 40 mm, L/D ratio 38) at temperatures in the range of 170-190°C, using a high intensity mixing screw configuration with two sets of kneading blocks.

**Compounds:**

**HECPO2**     is the commercial product EF015AE of Borealis AG.

**HECO3**     is the commercial product BF970MO of Borealis AG.

**HECO4**     is the commercial product BE170MO of Borealis AG.

**HECO5**     is the commercial product BH980MO of Borealis AG.

**PE 1**     is the commercial product Engage 8400 of Dow Elastomers having a MFR$_2$ (190 °C/2.16 kg) of 30 g/10min and a density of 870 kg/m$^3$.

**PE 2**     is the commercial high density polyethylene product MG 9641S of Borealis AG having a MFR$_2$ (190 °C/2.16 kg) of 8 g/10 min and a density of 964 kg/m$^3$.

**Talc 1**     is the commercial talc Luzenac HAR T84 of Luzenac having a mean particle size $d_{50}$ of 2.0 $\mu$m (Sedigraph).

**Talc 2**     is the commercial talc Steamic T1 CA of Luzenac having a mean particle size $d_{50}$ of 2.1$\mu$m (Sedigraph of compacted talc).

**Talc 3**     is the commercial talc Jetfine 3CA of Luzenac having a mean particle size $d_{50}$ of 1.0 $\mu$m (Sedigraph).

**Cellu**     is the commercial cellulose Arbocel C100 of J. Rettenmaier & Söhne GmbH & Co. having a particle size size $d_{50}$ between 70 and 150 $\mu$m.

The experimental heterophasic propylene copolymer HECO 1 was produced in a Borstar pilot plant with a prepolymerization reactor, one slurry loop reactor and three gas phase reactors. The catalyst Polytrack 8502, commercially available from Grace (USA) was used in combination with diethylaminotriethoxysilane [Si(OCH$_2$CH$_3$)$_3$(N(CH$_2$CH$_3$)$_2$)] as external donor and triethylaluminium (TEAL) as activator and scavenger in the ratios indicated in Table 1. The catalyst was modified by polymerising a vinyl compound in the presence of the catalyst system.

**Table 1:** Preparation of the heterophasic propylene copolymers (HECO1)

| Parameter Prepolymerisation | unit | HECO1 |
|---|---|---|
| temperature | [°C] | 30 |
| pressure | [kPa] | 5200 |
| Al/donor ratio | [mol/mol] | 10 |
| residence time | [h] | 0.5 |
| **Loop** | | |
| temperature | [°C] | 70 |
| pressure | [kPa] | 5500 |
| residence time | [h] | 0.5 |
| ethylene feed | [kg/h] | 0 |
| H2/C3 ratio | [mol/kmol] | 20 |
| **GPR1** | | |
| temperature | [°C] | 80 |
| pressure | [kPa] | 1600 |
| residence time | [h] | 1.7 |
| ethylene feed | [kg/h] | 0.2 |
| H2/C3 ratio | [mol/kmol] | 130 |
| **GPR2** | | |
| temperature | [°C] | 80 |
| pressure | [kPa] | 2700 |

(continued)

| GPR2 | | |
|---|---|---|
| residence time | [h] | 2.3 |
| ethylene feed | [kg/h] | 32.2 |
| H2/C3 ratio | [mol/kmol] | 21 |
| C2/C3 ratio | [mol/kmol] | 300 |
| GPR3 | | |
| temperature | [°C] | 85 |
| pressure | [kPa] | 2600 |
| residence time | [h] | 1.2 |
| ethylene feed | [kg/h] | 17 |
| H2/C2 ratio | [mol/kmol] | 70 |
| C2/C3 ratio | [mol/kmol] | 300 |

**Table 2:** Properties of the employed heterophasic copolymers (HECO)

| | | HECO 1 | HECO 2 | HECO 3 | HECO 4 | HECO 5 |
|---|---|---|---|---|---|---|
| $MFR_2$ of matrix | [g/10 min] | 250 | 85 | 40 | 21 | 52 |
| XCS of matrix | [wt.-%] | 2.5 | 2.3 | 1 | 1.3 | 2 |
| $MFR_2$ | [g/10 min] | 35 | 18 | 20 | 13 | 45 |
| XCS | [wt.-%] | 31 | 29 | 17.5 | 14.5 | 9.5 |
| $C_2$ total | [wt.-%] | 11 | 20 | 8 | 8 | 4.6 |
| $C_2$ in XCS | [wt.-%] | 33 | 45 | 34 | - | 37 |
| IV in XCS | [dl/g] | 2.9 | 3.0 | 3.1 | - | 2.2 |

**Table 3:** Compositions of the comparative and reference examples

| | | CE 1 | CE 2 | CE 3 | CE 4 | IE1 | CE5 |
|---|---|---|---|---|---|---|---|
| HECO 1 | [wt.-%] | 77 | 77 | - | - | - | - |
| HECO 2 | [wt.-%] | - | - | 67.91 | - | - | - |
| HECO 3 | [wt.-%] | - | - | 15 | - | 77.11 | 66.6 |
| HECO 4 | [wt.-%] | - | - | - | 48.4 | - | - |
| HECO 5 | [wt.-%] | - | - | - | 15 | - | - |
| PE 1 | [wt.-%] | - | - | - | - | - | 10 |
| PE 2 | [wt.-%] | - | - | 10 | 10 | - | - |
| Talc 1 | [wt.-%] | 20 | - | - | - | - | - |
| Talc 2 | [wt.-%] | - | - | - | 20 | - | - |
| Talc 3 | [wt.-%] | - | 20 | 20 | - | - | - |
| Cellu | [wt.-%] | - | - | - | - | 20 | 20 |
| CE: comparative example; IE: reference example | | | | | | | |

Rest to 100 wt.-% are additives such as antioxidants and pigments (e.g. carbon black).

A comparison of the gloss, scratch visibility, surface tack, tensile modulus, tensile strain at break, and Charpy NIS values measured for the prepared compositions CE1 to CE5, as well as IE1 is shown in Table 4. It can be observed that the gloss value and the surface tack values of the reference composition are significantly lower than those of the comparative examples. The scratch visibility values of the inventive composition is many times lower than the scratch visibility values of comparative examples CE1 and CE2 and similar to those of comparative examples CE3, CE4 and CE5.

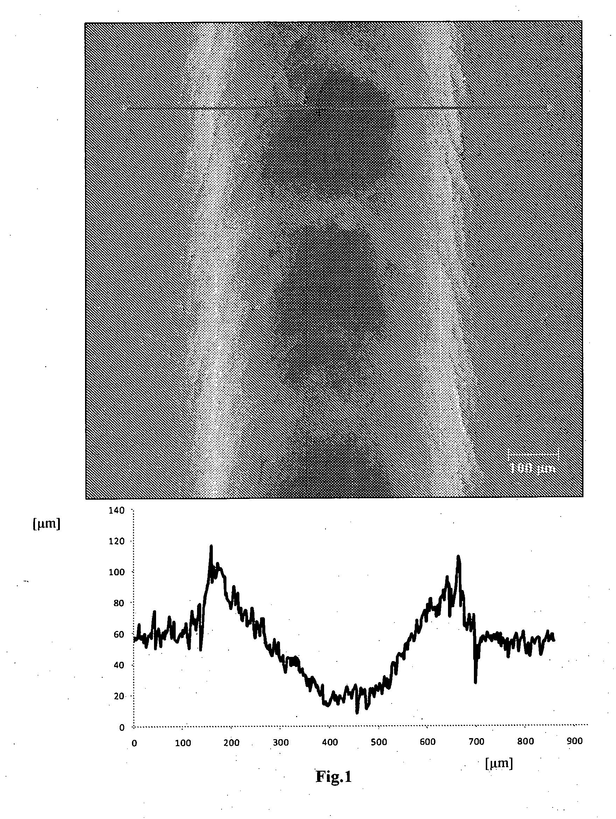

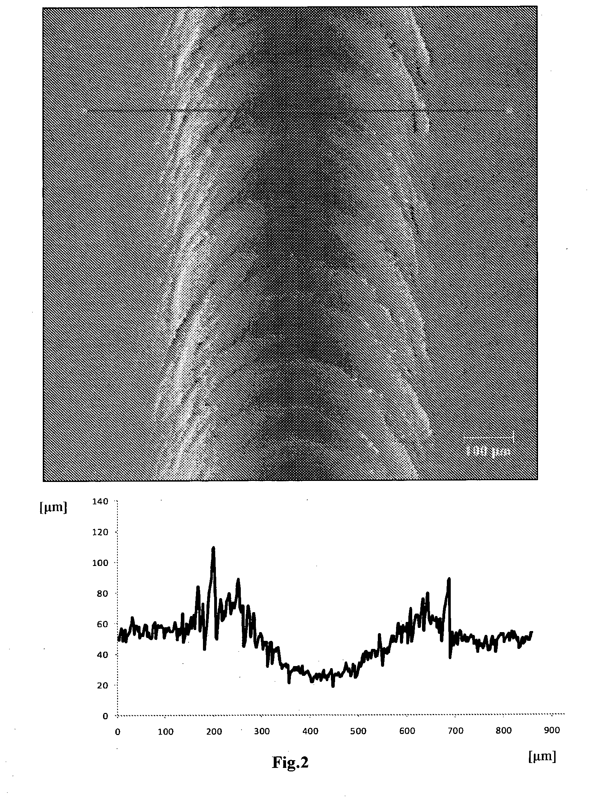

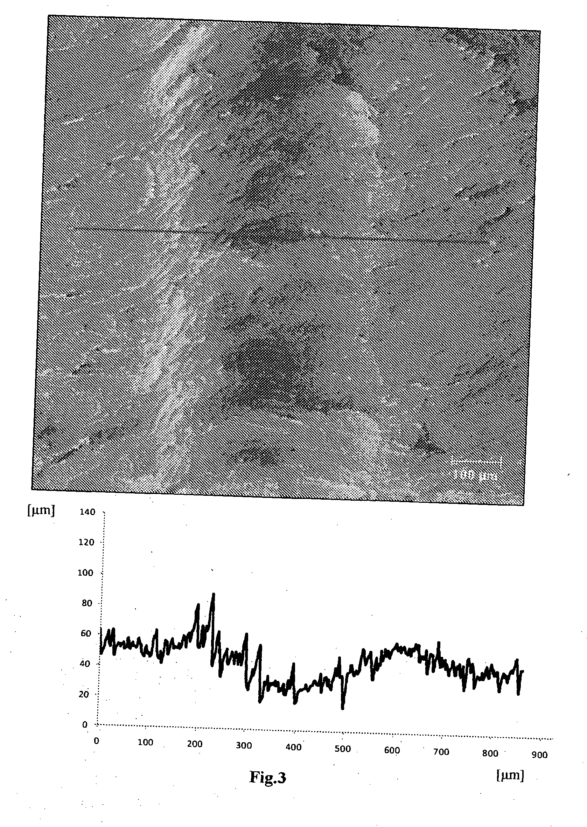

Furthermore, laser scanning microscopy investigations of the scratched surface (K29) carried out for comparative examples CE2 and CE3 and reference examples IE1 revealed that not only the scratch visibility is reduced for the reference composition IE1 but also the depth of the scratches is decreased (see Figs. 1 to 3).

Thus, the results show that the reference composition possess high scratch resistance, low gloss, and low surface tack, i.e. good haptics.

**Table 4:** Properties of the comparative and reference examples

| | | CE1 | CE2 | CE3 | CE4 | IE1 | CE5 |
|---|---|---|---|---|---|---|---|
| Gloss (grain K09) | [%] | 2.6 | 2.4 | 3.4 | 3.5 | 1.6 | 2.0 |
| Scratch visibility $\Delta L$ | [-] | 8.8 | 10.5 | 1.1 | 0.9 | 1.1 | 0.9 |
| Surface tack $Q_T$ (unstored) | [-] | 0.87 | 0.61 | 0.88 | - | 0.36 | 0.54 |
| Surface tack $Q_T$ (7 d/70°C) | [-] | 0.56 | 0.52 | 0.97 | - | 0.42 | 0.56 |
| Surface tack $Q_T$ (14 d/70°C) | [-] | 0.78 | 0.86 | 0.97 | - | 0.30 | 0.69 |
| Tensile Modulus | [MPa] | 2129 | 2654 | 1804 | 2537 | 2515 | 1902 |
| Tensile strain at break | [%] | 7.4 | 5.9 | 11.2 | 13.8 | 3.9 | 9.2 |
| Charpy NIS (23°C) | [kJ/m$^2$] | 6.2 | 5.8 | 40.5 | 5.3 | 2.3 | 5.7 |

**Claims**

1. A composition comprising

    (a) at least one heterophasic polymer composition, consisting of

       - a propylene homopolymer and/or a propylene copolymer matrix phase (M), and
       an elastomeric propylene copolymer (E1) which is dispersed within said matrix phase,
       wherein the heterophasic composition may optionally include polyethylene in an amount of 5 wt.-% or less
       with respect to the total amount of the heterophasic polymer composition,
       and

    (b) a cellulose-based filler, wherein
    the cellulose-based filler is present in an amount from 7.5 to 22 wt.-% based on the total amount of the composition,

    and wherein the cellulose-based filler has a particle size $d_{50}$ between 70 and 150 $\mu$m; and wherein the composition does not comprise talc.

2. The composition of claim 1, wherein the elastomeric propylene copolymer (E1) has an intrinsic viscosity in decalin at 135°C, determined according to DIN ISO 1628/1, October 1999, in the range from 1.5 to 3.5 dl/g.

3. The composition of any one of the preceding claims, wherein the amount of the xylene cold soluble (XCS) fraction, determined at 25°C according to ISO 16152; first edition; 2005-07-01, of the heterophasic polymer composition is in the range from 12 to 50 wt.-% based on the total amount of the heterophasic polymer composition.

4. The composition of any one of the preceding claims, wherein the heterophasic polymer composition has a melt flow rate MFR (230°C), determined according to ISO 1133 (230°C, 2.16 kg load), of at least 10 g/10 min.

5. The composition of any one of the preceding claims, wherein the cellulose-based filler is selected from the group consisting of wood, flax, hem, jute, straw, hardboard, cardboard, paper, pulp, raw cellulose, cellulose, cellulose acetate, cellulose triacetate, cellulose propionate, cellulose acetate propionate, cellulose acetate butyrate, nitrocellulose, methylcellulose, ethylcellulose, ethyl methyl cellulose, hydroxyethyl cellulose, hydroxypropyl cellulose (HPC), hydroxyethyl methyl cellulose, hydroxypropyl methyl cellulose (HPMC), ethyl hydoxyethyl cellulose, carboxymethyl cellulose (CMC), and any mixtures thereof.

6. A process for the preparation of the composition of any one of claims 1 to 5, wherein the at least one heterophasic polymer composition, and the cellulose-based filler, are extruded in an extruder, wherein preferably the heterophasic polymer composition is obtained by producing the propylene homopolymer and/or propylene copolymer matrix phase (M) in at least one reactor, transferring said matrix phase in a subsequent reactor, where in presence of the matrix phase (M) the elastomeric propylene copolymer (E1) is produced.

7. Use of the composition of any one of claims 1 to 5 for the production of automotive articles, preferably interior automotive articles, more preferably dash boards, instrument panels, door claddings, trunk claddings, arm rests, gear sticks, shift lever knobs, mats, interior skins, or interior trims.

8. Automotive article comprising a composition of any one of claims 1 to 5, wherein preferably the automotive article is an interior automotive article, preferably a dash board, instrument panel, door cladding, trunk cladding, arm rest, gear stick, shift lever knob, mat, interior skin, or interior trim.

**Patentansprüche**

1. Zusammensetzung, umfassend

   (a) mindestens eine heterophasische Polymer-Zusammensetzung, bestehend aus

   - einem Propylen-Homopolymer- und/oder einer Propylen-Copolymer-Matrix-Phase (M), und einem elastomeren Propylen-Copolymer (E1), welches in der Matrix-Phase dispergiert ist, wobei die heterophasische Zusammensetzung gegebenenfalls Polyethylen in einer Menge von 5 Gew.-% oder weniger hinsichtlich der Gesamt-Menge der heterophasischen Polymer-Zusammensetzung, enthalten kann, und

   (b) einen Cellulose-basierten Füllstoff, wobei der Cellulose-basierte Füllstoff in einer Menge von 7,5 bis 22 Gew.-%, basierend auf der Gesamt-Menge der Zusammensetzung, vorliegt,

   und
   wobei der Cellulose-basierte Füllstoff eine Teilchengröße $d_{50}$ zwischen 70 und 150 $\mu$m aufweist; und wobei die Zusammensetzung kein Talkum umfasst.

2. Zusammensetzung nach Anspruch 1, wobei das elastomere Propylen-Copolymer (E1) eine Grenz-Viskosität in Decalin bei 135°C, bestimmt gemäß DIN ISO 1628/1, Oktober 1999, in dem Bereich von 1,5 bis 3,5 dl/g aufweist.

3. Zusammensetzung nach einem der vorangehenden Ansprüche, wobei die Menge von der in kaltem Xylol löslichen Fraktion (XCS), bestimmt bei 25°C gemäß ISO 16152; erste Ausgabe; 01.07.2005, der heterophasischen Polymer-Zusammensetzung in dem Bereich von 12 bis 50 Gew.-%, basierend auf der Gesamt-Menge der heterophasischen Polymer-Zusammensetzung, liegt.

4. Zusammensetzung nach einem der vorangehenden Ansprüche, wobei die heterophasische Polymer-Zusammensetzung eine Schmelze-Fließ-Rate MFR (230°C), bestimmt gemäß ISO 1133 (230°C, 2,16 kg Last), von mindestens 10 g/10 min aufweist.

5. Zusammensetzung nach einem der vorangehenden Ansprüche, wobei der Cellulose-basierte Füllstoff ausgewählt ist aus der Gruppe, bestehend aus Holz, Flachs, Hanf, Jute, Stroh, Hartfaserplatte, Karton, Papier, Zellstoff, Rohcellulose, Cellulose, Celluloseacetat, Cellulosetriacetat, Cellulose-propionat, Celluloseacetatpropionat, Cellulose-acetatbutyrat, Nitrocellulose, Methylcellulose, Ethyl-cellulose, Ethylmethyl-cellulose, Hydroxyethyl-cellulose, Hydroxypropyl-cellulose (HPC), Hydroxyethylmethylcellulose, Hydroxypropylmethyl-cellulose (HPMC), Ethylhydoxyethylcellulose, Carboxymethyl-cellulose (CMC) und beliebigen Gemischen davon.

6. Verfahren zur Herstellung der Zusammensetzung nach einem der Ansprüche 1 bis 5, wobei die mindestens eine heterophasische Polymer-Zusammensetzung und der Cellulose-basierte Füllstoff in einen Extruder extrudiert werden, wobei vorzugsweise die heterophasische Polymer-Zusammensetzung durch Herstellen der Propylen-Homopolymer- und/oder Propylen-Copolymer-Matrix-Phase (M) in mindestens einem Reaktor, Überführen der Matrix-Phase in einen anschließenden Reaktor, wobei das elastomere Propylen-Copolymer (E1) in Gegenwart der Matrix-Phase (M) hergestellt wird, erhalten wird.

7. Verwendung der Zusammensetzung nach einem der Ansprüche 1 bis 5 zur Herstellung von Kraftfahrzeug-Gegenständen, vorzugsweise inneren Kraftfahrzeug-Gegenständen, bevorzugter Armaturenbrettern, Instrumententafeln, Tür-Verkleidungen, Gepäckraum-Verkleidungen, Armlehnen, Schaltknüppeln, Gangschaltungshebeln, Fußmatten, Fahrgastraum-Abdeckungen oder Innen-Verkleidungen.

8. Kraftfahrzeug-Gegenstand, umfassend eine Zusammensetzung nach einem der Ansprüche 1 bis 5, wobei vorzugsweise der Kraftfahrzeug-Gegenstand ein Fahrgastraum-Kraftfahrzeug-Gegenstand, vorzugsweise ein Armaturenbrett, Instrumententafel, Tür-Verkleidung, Gepäckraum-Verkleidung, Armlehne, Schaltknüppel, Gangschaltungshebel, Fußmatte, Fahrgastraum-Abdeckung oder Innen-Verkleidung ist.

**Revendications**

1. Composition comprenant

   (a) au moins une composition de polymère hétérophasique, consistant en

   - une phase de matrice d'homopolymère de propylène et/ou de copolymère de propylène (M), et
   - un copolymère de propylène élastomère (E1) qui est dispersé dans ladite phase de matrice, et
   dans laquelle la composition hétérophasique peut optionnellement contenir du polyéthylène en une quantité de 5 % en poids ou moins par rapport à la quantité totale de la composition de polymère hétérophasique, et

   (b) une charge à base de cellulose,

   dans laquelle la charge à base de cellulose est présente en une quantité de 7,5 à 22 % en poids basés sur la quantité totale de la composition,
   et dans laquelle la charge à base de cellulose a une taille de particule $d_{50}$ comprise entre 70 et 150 $\mu$m et dans laquelle la composition ne comprend pas de talc.

2. Composition selon la revendication 1 ou 2, dans laquelle le copolymère de propylène élastomère (E1) a une viscosité intrinsèque dans la décaline à 135°C, déterminée conformément à la norme DIN ISO 1628/1 d'octobre 1999, dans la plage de 1,5 à 3,5 dl/g.

3. Composition selon l'une quelconque des revendications précédentes, dans laquelle la quantité de la fraction soluble à froid dans le xylène (XCS), déterminée à 25°C conformément à la norme ISO 16152, première édition, 2005-07-01, de la composition de polymère hétérophasique est dans la plage de 12 à 50 % en poids basés sur la quantité totale de la composition de polymère hétérophasique.

4. Composition selon l'une quelconque des revendications précédentes, dans laquelle la composition de polymère hétérophasique présente un indice de fluage MFR (230°C), déterminé conformément à la norme ISO 1133 (230°C, charge de 2,16 kg), d'au moins 10 g/10 min.

5. Composition selon l'une quelconque des revendications précédentes, dans laquelle la charge à base de cellulose est choisie dans le groupe constitué par le bois, le lin, le chanvre, le jute, la paille, les fibres de bois, le carton, le papier, la pâte à papier, la cellulose brute, la cellulose, l'acétate de cellulose, le triacétate de cellulose, le propionate de cellulose, l'acétopropionate de cellulose, l'acétobutyrate de cellulose, la nitrocellulose, la méthylcellulose, l'éthylcellulose, l'éthylméthylcellulose, l'hydroxyéthylcellulose, l'hydroxypropylcellulose (HPC), l'hydroxyéthylméthylcellulose, l'hydroxypropylméthylcellulose (HPMC), l'éthylhydroxyéthylcellulose, la carboxyméthylcellulose (CMC), et l'un quelconque de leurs mélanges.

6. Procédé pour la préparation de la composition de l'une quelconque des revendications 1 à 5, dans lequel l'au moins une composition de polymère hétérophasique, et la charge à base de cellulose, sont extrudées dans une extrudeuse, dans lequel de préférence la composition de polymère hétérophasique est obtenue par production de la phase de matrice d'homopolymère de propylène et/ou de copolymère de propylène (M) dans au moins un réacteur, transfert de ladite phase de matrice dans un réacteur subséquent où, en présence de la phase de matrice (M), le copolymère de propylène élastomère (E1) est produit.

7. Utilisation de la composition de l'une quelconque des revendications 1 à 5 pour la production d'articles d'automobile, de préférence d'articles d'intérieur d'automobile, plus préférablement de planches de bord, de tableaux de bord, de parements de portière, de parements de coffre, d'accoudoirs, de leviers de vitesses, de boutons de sélection de vitesses, de tapis, de revêtements intérieurs, ou d'habillages intérieurs.

8. Article d'automobile comprenant une composition de l'une quelconque des revendications 1 à 5, dans lequel de préférence l'article d'automobile est un article d'intérieur d'automobile, de préférence une planche de bord, un tableau de bord, un parement de portière, un parement de coffre, un accoudoir, un levier de vitesses, un bouton de sélection de vitesses, un tapis, un revêtement intérieur, ou un habillage intérieur.

**Fig.1**

**Fig.2**

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011130487 A
- US 2006052541 A
- WO 0222731 A
- WO 2006063698 A
- WO 2005111145 A
- WO 2007139622 A
- EP 2083046 A

- EP 0887379 A
- WO 9212182 A
- WO 2004000899 A
- WO 2004111095 A
- WO 9924478 A
- WO 9924479 A
- WO 0068315 A

**Non-patent literature cited in the description**

- **ÇAKMAK et al.** A novel test method for quantifying surface tack of polypropylene compound surfaces. *eXPRESS Polymer Letters,* 2011

- Evaluation of scratch resistance in multiphase PP blends. **THOMAS KOCH ; DORIS MACHL.** POLYMER TESTING. 2007, vol. 26, 927-936